# EUROPÄISCHE PATENTSCHRIFT

(11) **EP 1 473 123 B1**
(45) Veröffentlichungstag und Bekanntmachung des Hinweises auf die Patenterteilung: **06.06.2018**
(21) Anmeldenummer: 03009654.9
(22) Anmeldetag: 30.04.2003
(51) Int. Cl.: B25J 9/16, B25J 9/00

(54) **System zum Erfassen, Beeinflussen und Ausnutzen von Roboterbewegungen**
System for detecting, modifying and exploiting the movements of a robot
Système pour détecter, modifier et exploiter les mouvements d'un robot

(43) Veröffentlichungstag der Anmeldung: 03.11.2004
(73) Patentinhaber: Battenberg, Günther, 35043 Marburg (DE)
(72) Erfinder: Battenberg, Günther, 35043 Marburg (DE)
(74) Vertreter: Grünecker Patent- und Rechtsanwälte PartG mbB

(56) Entgegenhaltungen:
- EP-A- 0 336 342
- EP-A- 1 202 041
- US-A- 4 621 332
- US-A- 4 836 742
- US-A- 5 125 149
- US-A- 5 386 762
- US-A- 5 959 425

## Beschreibung

Die Erfindung betrifft ein System zum Erfassen, Beeinflussen und Ausnutzen von Roboterbewegungen gemäß dem Oberbegriff des Anspruchs 1.

Ein gattungsgemäßes System ist beispielsweise aus der EP 1 202 041 A1 bekannt.

Für Industrieroboter ist beispielsweise aus DE-C3-36 27 560 ersichtlich, wie und womit Fertigungs- und Montageaufgaben wirtschaftlich gelöst werden können. Eine wichtige Anwendung von Robotern ist die Steuerung von Bewegungen, neuerdings vor allem in Koppelung mit Visionssystemen und Sensoren. Mit der zunehmend gebräuchlichen robotergestützten Meßtechnik nutzt man die Möglichkeit, Roboter als sensorisierte Meßwerkzeuge, ferner für vielerlei Meßaufgaben sowie in automatisierten Produktions- und Prüfabläufen einzusetzen, etwa in der Fahrzeugindustrie. In DE- U1-200 03 381 ist eine Prüfeinrichtung für bewegliche optische Meßeinrichtungen erläutert, die ein- oder mehrachsig und von einem Manipulator geführt sein können. Um zu vermeiden, daß Roboter-Positionierfehler in die Kalibrierung eingehen, positioniert man durch einen Halter ein Referenzmuster - etwa eine Bohrung, Kante o.dgl. - vorübergehend derart, daß ein Arbeitspunkt (tool center point, TCP) beobacht- und anzeigbar ist, dessen Kalibrierung sich ohne Roboterfehler mittels einer Stelleinrichtung oder relativ zu ihr nachjustieren läßt.

Auch im Schnittstellenbereich zwischen Mensch und Technik findet die Robotik ein Anwendungsfeld, beispielsweise um Sinneseindrücke in faß- und verwertbare Daten umzusetzen. Die aktive Berührung technischer Geräte und der direkte Kontakt mit Bedienelementen beeinflußt das Verhalten der Benutzer, die auf bequeme und angenehme Einstellbarkeit von Funktionskomponenten Wert legen. Deshalb besteht Bedarf an Möglichkeiten, für diese Wechselwirkung Grundlagen und Maßstäbe zu entwickeln, die über das rein subjektive Empfinden hinausgehen.

Die US 5,959,425 lehrt die optische Überprüfung der Lage eines zu schweißenden Werkstücks.

Die US 5,125,149 betrifft das Greifen von Gegenständen im Rahmen der Fertigung durch einen Roboter und kontrolliert durch bildgebende Mittel.

Die Erfindung zielt darauf ab, Meß- und Prüfaufgaben in der Produktion und Qualitätssicherung durch Einsatz von Robotertechnik unter Verwendung verschiedenartiger Sensoren zu lösen. Insbesondere sollen Zustände und Bewegungsabläufe zuverlässig so erfaßt werden, daß man ihre Daten für gewünschte Einwirkungen und Kontrollen vielfältiger Art nutzbar machen kann. Durch Gewinnung objektiver, reproduzierbarer Beurteilungskriterien sollen unter anderem rasch Vergleiche von Eigen- und Fremdprodukten möglich sein, vor allem hinsichtlich der Haptik in Fahrzeug-Innenräumen. Dabei sind wichtige Einsatzziele der Meßrobotic die Harmonisierung der Bedienkräfte, so daß alle Funktionsträger harmonisch ausgelegt werden, und außerdem eine gleichbleibend hohe Wertanmutung.

Zur Lösung des oben beschriebenen Problems wird ein System gemäß Anspruch 1 angegeben. Weitere vorteilhafte Ausgestaltungen sind in den Unteransprüchen definiert. Mit einem erfindungsgemäßen System zum Erfassen, Beeinflussen und Ausnutzen von Roboterbewegungen werden während ihres Ablaufs orts-, lage- und bewegungsabhängige Funktionen an ausgewählten Körpern und Flächen, die in Reichweite eines Roboters angeordnet sind, mit von diesem geführten Sensoren gemessen bzw. abgetastet, und die digitalisierten Meßwerte werden z.B. in einem Computer gespeichert und/oder in die Steuerung der Roboterbewegung eingebracht.

Man gewinnt auf diese Weise sehr rasch und einfach räumliche Vektor- und Skalarfelder, die nach Bedarf zur späteren Analyse gespeichert oder auch sofort zur sensorgeführten Robotersteuerung verwendet werden können. Die zuverlässigen Meßergebnisse sind untereinander vergleichbar. Das System ist überaus vielfältig anwendbar, etwa beim Beschicken und Entladen von Werkzeugmaschinen oder Meßmaschinen, bei der Herstellung von Präzisionsteilen sowie beim Zusammenbau und allgemein in der Handhabungstechnik. Man kann es in der Forschung und Entwicklung ebenso einsetzen wie in der Produktion, bei der On-line-Kontrolle zur Qualitätssicherung und bei der Gesamtfahrzeuganalyse. Es eignet sich ferner gut zum Einsatz an einer einzigen Komponente, etwa einem Klimabediengerät, und einem definierten Funktionsraum, z.B. an einer Fahrzeug-Mittelkonsole. Möglich ist aber auch die Harmoniesierung an vielen oder allen Bedienkomponenten eines Fahrzeugs, welche in solchem Falle die ausgewählten Körper bzw. Flächen bilden. So lassen sich beispielsweise Spaltmaße, Schichtdicken, Körperschall, Strömungen, Temperaturen, Schaltwege und -zeiten, Steck- und Ziehkräfte, Schließmomente usw. messen, protokollieren oder auch im direkten Feedback sogleich als Regelgrößen benutzen.

Durch Ausführen und Auswerten der Messungen in Echtzeit erzielt man einen außerordentlichen Zeitvorteil gegenüber herkömmlichen Methoden, weil die Ergebnisse instantan nutzbar sind. Speziell sieht die Erfindung vor, daß an den Körpern und Flächen ausgewählte Bedienfunktionen einleitbar sind und daß während ihres Ablaufs Bedienkräfte und -momente in Abhängigkeit von Betätigungswegen und -winkeln mit den Sensoren meßbar und/oder z.B. mittels einer Kamera überwachbar sind. Die Ergebnisse stehen also unmittelbar zur Verfügung und lassen sich bei Bedarf sofort in laufende Vorgänge einspeisen.

Eine wichtige Ausgestaltung besteht darin, daß mit dem bzw. jedem Roboter ein aufgenommener Sensor auf programmierter Meßkurve führbar ist, wobei die Roboterbahn zugleich jeweils Sensor-Meßwerten oder -Meßfeldern zugeordnet ist. Dank der Verknüpfung des bzw. jedes Raumpunkts der Roboterbahn mit den Sensor-Meßdaten ist in jedem Augenblick eine exakte Ist-Feststellung von Positionen und/oder Bewegungen gewährleistet, was im Bedarfsfalle den Vergleich mit Sollwerten oder mit zuvor gewonnenen Werten auf einfachste Weise ermöglicht. Ist dann eine Teilaufgabe gelöst, so kann ein nicht mehr benötigter Sensor abgelegt und für die nächste Arbeit ein neuer Sensor aufgegriffen werden.

Die Meßwerte bzw. Meßfelder sind mit PC-Programmen protokollierbar und/oder analysierbar. Das erlaubt die Bereitstellung auch für statistische Zwecke. Zur Unterstützung geeignete Software bietet z.B. RobFlow unter Windows NT oder Linux. Roboter und PC stehen über ein Netzwerk wie Ethernet, ARCNET usw. miteinander in Verbindung. Ein Prüfablauf kann beispielsweise für einen mit Windows NT betriebenen Computer in Visual Basic, C++ oder Delphi programmiert werden.

Die protokollierten Meßwerte bzw. Meßfelder in Echtzeit an die Robotersteuerung übertragbar, bevorzugt gemäß Anspruch 3 über ein Real-Time-Kernel-Interface, einen Netzwerkanschluß, eine parallele Schnittstelle o.dgl., so daß gegenüber der herkömmlichen Technik ein Vielfaches an Verarbeitungsgeschwindigkeit erreicht wird.

Ein in sich ortsfestes, insgesamt aber durchaus versetzbares Bezugssystem entsteht, wenn nach Anspruch 4 oder bzw. jeder Roboter in einem Fahrzeug, auf oder neben einem Prüftisch, einer Meßplattform u.dgl. fixiert wird. Ferner kann in der Weiterbildung wenigstens ein Prüftisch, eine Meßplattform, eine Grundplatte o.dgl. vorgesehen sein, woran durch PC-gesteuerte Regelung programmierte Prüftisch- und/oder Roboter-Positionen präzise anlaufbar sind, die zweckmäßig im Teach-in-Verfahren vorab festgelegt werden. Eine ganze Anzahl von zu messenden Teilen läßt sich bequem unterbringen, z.B. in einzeln aufbaubaren Magazinen unterschiedlicher Größe. Neben einfacher Bedienbarkeit erzielt man hohe Flexibilität und Mobilität, weil über austauschbare Segmentaufnahmen neue Prüfteile samt Datenträgern schnell eingesetzt und gemessen werden können. Die Rüstzeiten sind daher kurz, wodurch die Verfügbarkeit des Systems erheblich gesteigert wird.

Besonders gut eignet sich gemäß Anspruch 5 ein kreisrund begrenzter Prüftisch, der spitzwinkelig gestaltete, einzeln einsetz- und entnehmbare Segmente aufweist. Das ist eine sehr einfache, übersichtliche Konfiguration, da solche Segmente den runden Prüftisch im Schnellwechselsystem quasi aus Tortenstücken aufbauen. Im Einklang mit Anspruch 6 sind zumindest vorbestimmte Segmente jeweils mit einem berührungslos abtastbaren Datenträger versehen, der Speicherinformationen für automatisch einleitbare Meßvorgänge enthält. Die zu messenden bzw. zu prüfenden Komponenten können so ohne zusätzliche Eingriffe segmentweise z.B. am Umfang identifiziert und kontrolliert werden. Dabei ist es günstig, wenn nach Anspruch 6 der Prüftisch schrittweise durch einen Servo-Direktantrieb verfahr- oder verdrehbar ist, dessen Antriebsachse speziell die siebente Achse eines Knickarmroboters bildet oder ihr zugeordnet ist. Sie wird vorzugsweise interpolierend zu den Meßpunkten verfahren.

Der bzw. jeder Roboter ist laut Anspruch 8 auf oder neben einem Prüftisch, einer Meßplattform u.dgl. montierbar, und zwar nach Bedarf im Labor, in einer Produktions-Roboterzelle, in einer Klimakammer, einem Fahrzeug o.dgl. Mit Besonderem Vorteil ist er zur Haptik-Prüfung laut Anspruch 9 in einem Fahrzeug namentlich auf dem Fahrzeugboden an der Stelle des Sitzes von Fahrer und Beifahrer fixierbar, um alle von dort erreichbaren Bedienelemente bewegen und/oder messen zu können.

Noch eine weitere Spezialisierung besteht gemäß Anspruch 10 in der Anordnung dreier Modultische oder Stationen innerhalb der Reichweite wenigstens eines Roboters, vorzugsweise in einer raumsparenden Stern-Gruppierung. Der Roboter ist nach Anspruch 18 zwischen oder neben zwei Modultischen bzw. Stationen angeordnet und insbesondere linear verfahrbar, so daß ein und derselbe Roboter mehrere Arbeitsfelder bedient.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Darin zeigen:
- Fig. 1: eine schematische Draufsicht auf eine Roboteranordnung mit drei Modulfeldern,
- Fig. 2: eine Schrägansicht eines Prüftisches mit Meßroboter,
- Fig. 2a: eine Schrägdraufsicht auf zwei Prüftisch-Segmente,
- Fig. 3: eine schematische Darstellung der Anordnung eines Roboters in einem Kraftfahrzeug,
- Fig. 4: eine schematische Draufsicht auf einen Roboter im Zentrum von Modultischen,
- Fig. 5: eine schematische Seitenansicht einer Prüfzelle für On-LineProduktkontrolle und
- Fig. 6: eine schematische Seitenansicht einer anderen Prüfzelle.

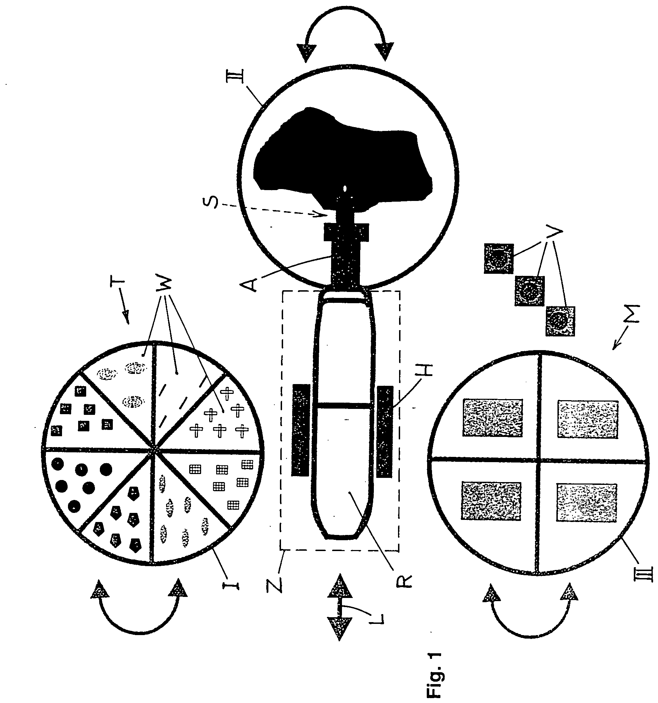

Schematisch ist in Fig. 1 eine sternförmige Anordnung von drei Modultischen bzw. Stationen I, II, III gezeigt, die einen zentralen Roboter R umgeben. Dieser ist in Längsrichtung L auf einer Grundplatte Z verfahrbar. Auf einem Arm A trägt er einen (angedeuteten) Sensor S. Das aus Moduln zusammengesetzte System kann eine ortsfeste Anlage oder mobil ausgebildet sein.

Die Modulstation I ist als Prüftisch T ausgebildet, der mit einer Anzahl von Segmenten W versehen bzw. aus diesen zusammengesetzt ist. Diese tragen verschiedene Prüfobjekte, wobei jeweils gleichartige Gegenstände auf einem Segment W in passenden Abständen so angeordnet sind, daß der Roboter R sie mit seinem Sensor S erfassen und beispielsweise auf ihren Zustand, ihre Oberflächenbeschaffenheit o. dgl. abtasten kann. Zwischen den Stationen I und III befindet sich in Längsrichtung L des Roboters R ein Modultisch II. Diese Station haltert ein größeres, mit verschiedenen Komponenten bestückbares Bauteil. Dem Modultisch III, der eine Meßplattform M sein kann, sind Vorratsstationen V zugeordnet, von denen andere Objekte abgeholt werden können, um sie auf die Plattform M zu setzen.

Alle drei Modultische bzw. Stationen I, II, III können drehbar angetrieben sein, wie durch Doppelpfeile angedeutet ist. Vorzugsweise am Umfang jedes Tisches können Träger angebracht sein, die berührungslos abgetastet werden, um durch Identifikation der auf dem Tisch vorhandenen Elemente programmgesteuerte Vorgänge einzuleiten und durchzuführen. Man kann z.B. ausgewählte Komponenten anhand ihrer Kennzeichnung in vorbestimmter Anordnung auf ein Segment W bringen, dieses in den Prüftisch T einfügen, die Komponenten mit einem Sensor S kontrollieren und nach ordnungsgemäßem Befund das betreffende Segment W durch ein neues ersetzen.

Die Grundplatte Z ist beispielsweise ein Polymer-Gußteil, das eine Anzahl von Aufnahmebohrungen für die Montage einer Schlittenführung H des Roboters R und der Drehtisch-Lagerungen aufweist.

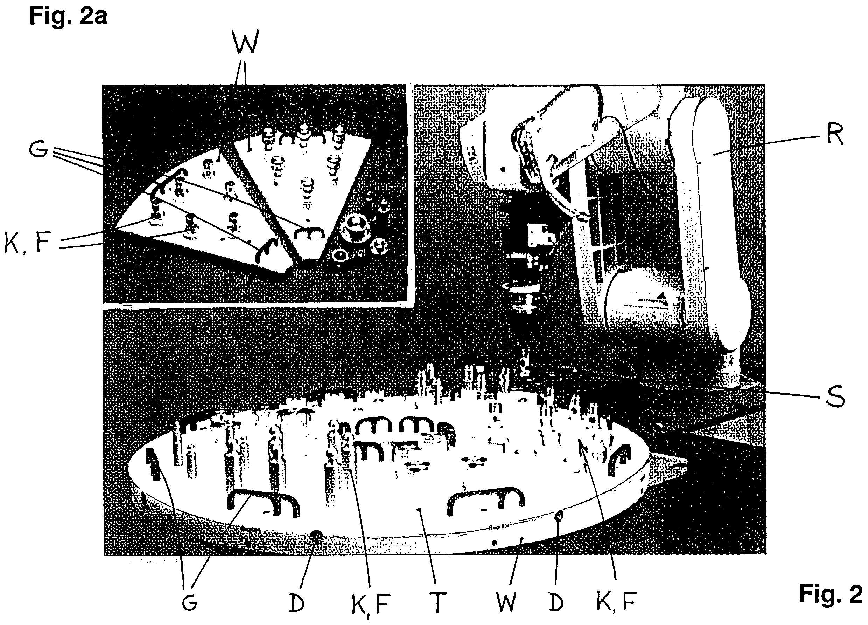

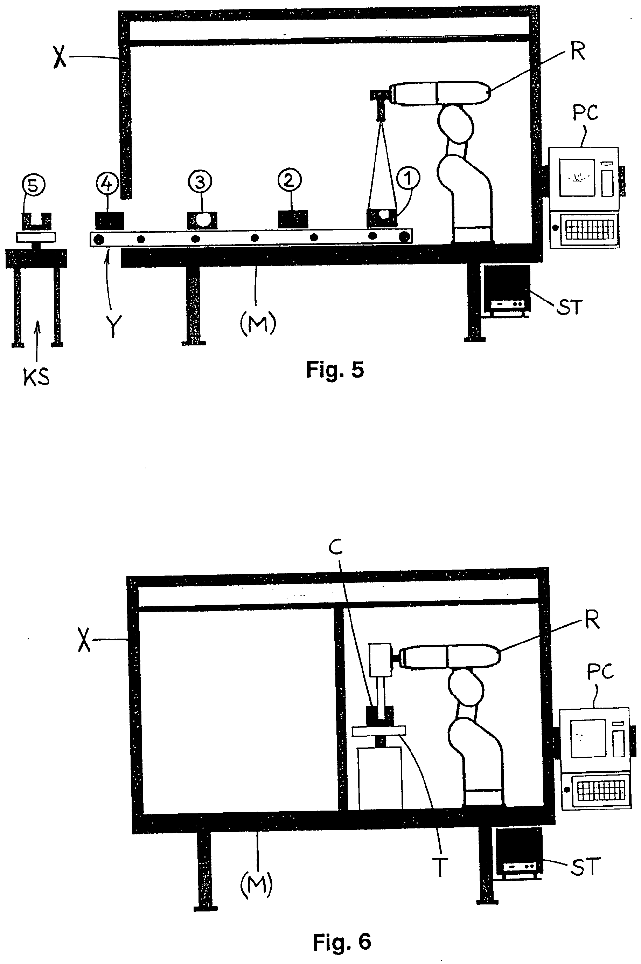

Gestelle können die Robotersteuerung ST und einen Computer PC aufnehmen (vergl. Fig. 5 und 6), der die Meßplatten des bzw. jedes Sensors S verwaltet. Der Roboter R kann vom Scara-Typ sein. Fig. 2 zeigt jedoch einen Knickarmroboter R in vertikaler Zuordnung zu einem Prüftisch T mit einzelnen Segmenten W, die jeweils Griffe G haben. Man erkennt, daß die Segmente W am Umfang ein relativ kleines Kennzeichnungsfeld als Datenträger D aufweisen. Sobald dieser mit seinem Segment W in die Kontroll- bzw. Meßposition eingelaufen ist, beginnt der dadurch ausgelöste Programmschritt. Nach dessen Ende fährt der Drehtisch in seine nächste Position.

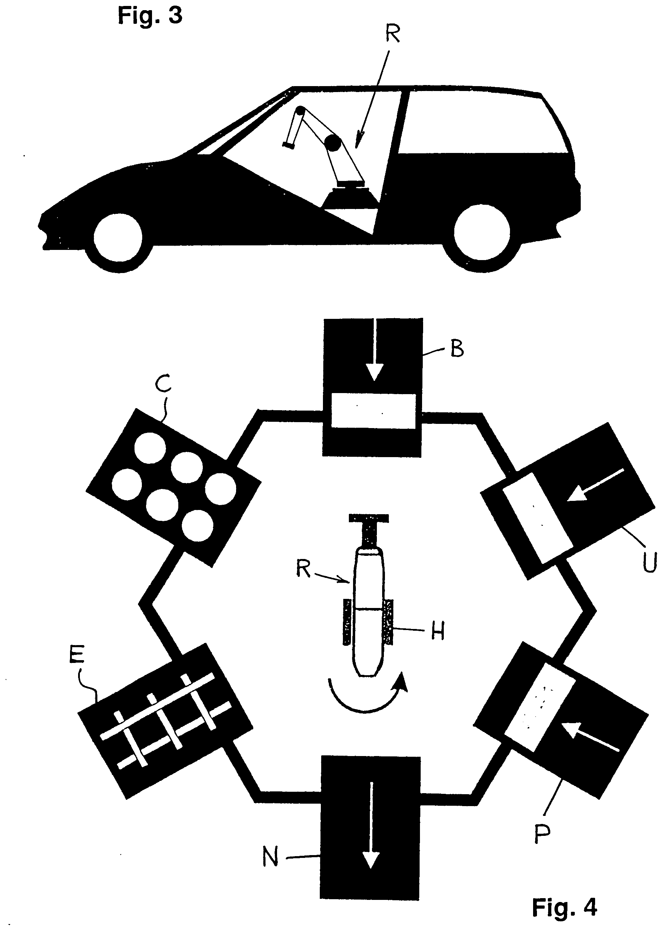

Aus Fig. 3 ist ersichtlich, daß der Roboter R in einem PKW zweckmäßig an der Stelle des ausgebauten Fahrersitzes auf dem Fahrzeugboden installiert sein kann, was für die Prüfung im Fahrzeug-Innenraum die optimale Positionierung ist. So lassen sich bequem und zuverlässig alle elektromechanischen Erprobungen sowie Messungen von Haptik, Temperatur, Strömungen, Steifigkeit usw. durchführen, aber auch Prüfstand- und Kontrolleinstellungen vornehmen.

Fig. 4 zeigt die Anordnung eines z.B. in Pfeilrichtung verschwenkbaren Roboters R auf einer Schlittenführung H im Zentrum einer Sechseck-Prüfstelle mit sechs Stationen, die unterschiedliche Prüflinge aufnehmen können. Schematisch und ohne Beschränkung auf diese speziellen Beispiele sind in Fig. 4 eine Mittelkonsole B, ein Cupholder C, eine Gruppe von Cockpit-Bedienfeldern E, ein Blinkerhebelsystem N, eine Klimabediengeräte-Anordnung P und eine Gruppe von Türmodulen U gezeichnet.

Für die On-Line-Produktkontrolle in der Serienfertigung eignet sich besonders eine Prüfzelle, wie sie schematisch in Fig. 5 dargestellt ist. Man erkennt, daß es sich um eine robotergestützte Prüfzelle handelt, die einen 3D-Meßtisch M in einer Einhausung X aufweist, die aus Aluminiumprofilen mit Makrolon-Sicherheitsscheiben bestehen kann. Der Meßtisch M hat vorzugsweise eine Transfereinrichtung Y, der eine Koppelstation KS (links in Fig. 5) zur Zu- und Abführung von Material zugeordnet ist. Als Roboter R kann ein 6-Achsen-Knickroboter eingesetzt werden, der vom Controller ST aus (rechts in Fig. 5) steuerbar sowie mit einer Greiferwechselstation und geeigneter Sensorik ausgerüstet ist. So lassen sich der Reihe nach Prüflinge 1, 2, 3, 4, 5 usw. ebenso bequem wie zuverlässig kontrollieren.

Mittels der Prüfzelle wird die Produktkontrolle direkt im Fertigungsprozeß automatisiert. Aus der Codierung der Werkzeugträger erkennt die Koppelstation KS den Prüfling, der sodann in eine Kontrollstation einfahren kann. Je nach Aufgabe adaptiert der Roboter R selbsttätig den notwendigen Greifer oder Sensor und kontrolliert z.B. die Einhaltung vorgegebener Fertigungstoleranzen. Am Ende dieses Vorgangs werden spezifische Abläufe eingeleitet, beispielsweise die Prüfling-Rückführung in die Montagelinie.

Zum Messen, Prüfen und Justieren kann eine ebenfalls robotergestützte Prüfzelle in der Art von Fig. 6 dienen. Sie hat wiederum eine mit Makrolonscheiben verglaste Sicherheits-Einhausung X. Im rechten Teilraum befindet sich neben einem Einzel-Prüftisch T ein von einem Controller ST gesteuerter Roboter R, beispielsweise ein 6-Achsen-Knickroboter. Wie schematisch angedeutet ist, adaptiert er z.B. aus einer Wechselstation den jeweils benötigten Greifer oder Sensor zum Prüfen, Erproben und/oder Justieren eines Prüflings, etwa eines Cupholders C.

Hier wie im Beispiel der Fig. 5 hat die Prüfzelle eine zur Lösung der jeweils gestellten Aufgabe geeignete Sensorik und einen 3D-Meßtisch M mit Bohrungen im Standardraster von z.B. 100 mm für variable Roboter- und Prüflings-Aufnahmen. An der Zelleneinhausung X ermöglichen bevorzugt zwei Schiebetüren mit Sicherheitsschalter den gefahrlosen Zugriff ins Innere. Der Industrie-PC steuert die Abläufe in der gesamten Prüfzelle, dokumentiert die Ergebnisse und stellt sie zur Weiterverarbeitung bereit.

Die Erfindung ist nicht auf eine der beschriebenen Ausführungsformen und Anwendungen beschränkt, sondern in vielfältiger Weise abwandel- und einsetzbar. Das System und die mit ihm verbundenen Verfahrensschritte sind nicht nur bei der Entwicklung von Bediengeräten und -elementen überaus nützlich, etwa bei Vorserien und Versuchsserien, sondern beispielsweise auch bei der Umweltsimulation in Klimakammern, bei der Qualitätssicherung und in der Gesamtfahrzeuganalyse. Man kann namentlich bei der Erprobung im Fahrzeug-Inneren Messungen, die sonst nur sehr aufwendig möglich sind, etwa im Cockpit während der Bedienung von Schaltern, Hebeln, Düsen usw. sowie beim Zugriff auf Handschuhfächer, Becherhalterungen, Gurte u.dgl. durchführen. So gewinnt man schon im Vorfeld objektive Daten für die Wertanmutung durch das, was ein Fahrzeuginsasse später sinnlich erfaßt, d.h. subjektiv fühlt, hört und sieht. Prüfabläufe lassen sich flexibel gestalten, denn aus der fortlaufenden Analyse von bedienungsabhängigen Kräften, Drehmomenten, Hystereseschaltpunkten u.dgl. anhand der elektrischen Signalreaktionen und Auswirkungen ergibt sich der weitere Prüfungsverlauf. Wird ein Roboter von außen entlang einer Linearschiene oder mittels einer Hubstation in ein Fahrzeug eingefahren, so kann er sich an vorgegebenen Kalibrierpunkten orientieren und sogar selbständig Betätigungspositionen finden. In Fertigung und Montage sind die kurzen Rüstzeiten außerordentlich vorteilhaft, weil sich dadurch die Verfügbarkeit und Wiederverwendbarkeit von Robotern sehr einfach steigern läßt, was unmittelbar zu Kostensenkungen führt.

Man sieht, daß nach der Erfindung zum Erfassen, Beeinflussen und Ausnutzen von Roboterbewegungen während ihres Ablaufs orts-, lage- und bewegungsabhängige Funktionen an ausgewählten Körpern K und Flächen F, die man zu Meß-, Prüf- oder Handhabungszwecken in Reichweite eines Roboters R anordnet, mit von ihm geführten oder ihm zugeordneten Sensoren S meßbar bzw. abtastbar sind, um digitalisierte Meßwerte insbesondere in einem Computer (PC) zu speichern und/oder direkt in die Steuerung der Roboterbewegungen einzubringen. Der betreffende Roboter R führt jeweils einen Sensor S auf programmierten Meßkurven, wobei jeder Roboterbahnpunkt RB [x(t), y(t), z(t)] zugleich einem Sensor-Meßwert oder -Meßfeld [SM (t)] zugeordnet wird, während an den Körpern K und Flächen F ausgewählte Bedienfunktionen eingeleitet und die dabei auftretenden Kräfte, Momente, Oberflächenänderungen usw. abhängig von Betätigungswegen und -winkeln gemessen und/oder überwacht werden. Die Meßwerte bzw. -felder [SM (t)] sind beispielsweise durch PC-Programme protokollierbar, analysierbar und/oder - bevorzugt in Echtzeit - an die Robotersteuerung übertragbar, namentlich über ein Real-Time-Kernel-Interface. Man benutzt zweckmäßig wenigstens einen drehbaren Prüftisch T, eine Meßplattform M o.dgl. mit austauschbaren Segmenten W und berührungslos abtastbaren Datenträgern D.

### Bezugszeichenliste

- A: Roboter-Arm
- B: Mittelkonsole
- C: Cupholder
- D: Datenträger
- E: Cockpit-Bedienfelder
- F: Flächen
- G: Griffe
- H: Schlittenführung
- K: Körper
- L: Längsrichtung
- M: Meßplattform / Meßtisch
- N: Blinkerhebelsystem
- P: Klimabediengeräte
- PC: Computer
- R: Roboter
- RB: Roboterbahn
- S: Sensoren
- SM: Sensor-Meßwerk / -Meßfelder
- ST: Controller
- T: Prüftisch
- U: Türmodule
- V: Vorratsstation
- W: Segmente
- X: Einhausung
- Y: Transfereinrichtung
- Z: Grundplatte
- I, II, III: Modultische / Stationen

## Patentansprüche

1. System zum Erfassen, Beeinflussen und Ausnutzen von Roboterbewegungen, mit einem Computer, einem Roboter und von diesem geführte Sensoren (S), mit denen während des Ablaufs der Roboterbewegungen auf programmierten Messkurven die beim Einleiten von ausgewählten orts-, lage- und bewegungsabhängigen Bedienfunktionen an ausgewählten Körpern und Flächen, die in Reichweite des Roboters angeordnet sind, auftretenden Bedienkräfte und - momente in Abhängigkeit von Betätigungswegen und -winkeln messbar sind, wobei die Messwerte bzw. -Messfelder [SM (t)] in digitalisierter Form in dem Computer speicherbar und mit PC-Programmen protokollierbar und analysierbar sind,
**dadurch gekennzeichnet, dass**
die protokollierten Messwerte bzw. -Messfelder [SM (t)] zur Steuerung der Roboterbewegungen in Echtzeit an die Robotersteuerung übertragbar sind.

2. System nach Anspruch 1 , **dadurch gekennzeichnet, dass** die Sensoren (S) an Roboter-Armen lösbar angebracht sind.

3. System nach Anspruch 1, **dadurch gekennzeichnet, daß** ein Real-Time-Kernel-Interface, ein Netzwerkanschluß, oder eine parallele Schnittstellevorgesehen ist um die protokollierten Messwerte bzw. -Messfelder [SM (t)] zu übertragen.

4. System nach einem der Ansprüche 1 bis 3, **dadurch gekennzeichnet, daß** der Roboter in einem Fahrzeug, auf oder neben einem Prüftisch, oder auf oder neben einer Meßplattform fixiert ist.

5. System nach einem der Ansprüche 1 bis 4, **dadurch gekennzeichnet, dass** ein kreisrund begrenzter Prüftisch (T) vorhanden ist, der spitzwinkelige, einzeln einsetz- und entnehmbare Segmente (W) aufweist.

6. System nach Anspruch 5, **dadurch gekennzeichnet, daß** zumindest vorbestimmte Segmente (W) jeweils mit einem berührungslos abtastbaren Datenträger (D) versehen sind, der Speicherinformationen für automatisch einleitbare Meßvorgänge enthält.

7. System nach einem der Ansprüche 4 bis 6, **dadurch gekennzeichnet, daß** der Prüftisch (T) schrittweise durch einen Servo-Direktantrieb verfahr- und/oder verdrehbar ist, der eine Knickarmroboter-Achse bildet oder ihr zugeordnet ist.

8. System nach einem der Ansprüche 1 bis 3, **dadurch gekennzeichnet, daß** der Roboter (R) auf oder neben einem Prüftisch, oder einer Meßplattform montiert ist.

9. System nach Anspruch 1 bis 3, **dadurch gekennzeichnet, daß** zumindest ein Roboter (R) in einem Fahrzeug namentlich auf dem Fahrzeugboden an der Stelle des Fahrer- oder Beifahrersitzes montierbar ist.

10. System nach einem der Ansprüche 1 bis 4, **dadurch gekennzeichnet, dass** drei Modultische oder Stationen (I, II, III) innerhalb der Reichweite des Roboters (R) angeordnet sind.

11. System nach Anspruch 10, **dadurch gekennzeichnet, daß** der bzw. jeder Roboter (R) zwischen oder neben zwei Modultischen bzw. -Stationen (I, III) angeordnet und linear verfahrbar ist.

## Claims

1. System for detecting, modifying and exploiting the movements of a robot, comprising a computer, a robot and sensors (S), which are guided by said robot and by means of which operating forces and moments can be measured, depending on actuation paths and angles, while the robot is moving according to programmed measurement curves, which forces and moments result from initiation of selected location-, position- and movement-dependent operating functions on selected bodies and surfaces arranged within the range of the robot, it being possible to store the measurement values or measurement fields [SM (t)] in the computer in digitised form and for PC programs to log and analyse said values and fields, **characterised in that** the logged measurement values or measurement fields [SM (t)] can be transmitted to the robot controller in real time in order to control the movements of the robot.

2. System according to claim 1, **characterised in that** the sensors (S) are removably attached to the robot arms.

3. System according to claim 1, **characterised in that** a real-time kernel interface, a network connection or a parallel interface is provided for transmitting the logged measurement values or measurement fields [SM (t)].

4. System according to any of claims 1 to 3, **characterised in that** the robot is fastened in a vehicle, on or adjacent to an inspection table, or on or adjacent to a measuring platform.

5. System according to any of claims 1 to 4, **characterised in that** a circularly defined inspection table (T) is provided, which comprises acute-angle segments (W) which can be individually inserted and removed.

6. System according to claim 5, **characterised in that** at least specified segments (W) are each provided with a data carrier (D) which can be scanned in a contactless manner and which contains stored information for automatically initiable measurement processes.

7. System according to any of claims 4 to 6, **characterised in that** the inspection table (T) can be moved and/or rotated in stages using a direct servo drive which forms or is assigned to an articulated robot axis.

8. System according to any of claims 1 to 3, **characterised in that** the robot (R) is mounted on or adjacent to an inspection table or a measurement platform.

9. System according to any of claims 1 to 3, **characterised in that** at least one robot (R) can be mounted in a vehicle, in particular on the floor of the vehicle in the position of the driver seat or of the passenger seat.

10. System according to any of claims 1 to 4, **characterised in that** three modular tables or stations (I, II, III) are arranged within the range of the robot (R).

11. System according to claim 10, **characterised in that** the robot, or each robot (R), is arranged and can be moved in a linear manner between or adjacent to two modular tables or stations (I, III).

## Revendications

1. Système pour relever, influencer et exploiter des mouvements de robot, comprenant un ordinateur, un robot et des capteurs (S) guidés et menés par celui-ci, à l'aide desquels, pendant le déroulement des mouvements de robot sur des courbes de mesure programmées, il est possible de mesurer, en fonction de déplacements et d'angles d'actionnement, les forces et les couples de manutention apparaissant lors de l'initiation de fonctions de manutention sélectionnées dépendant du lieu, de la position et des mouvements, sur des corps et des surfaces sélectionnées, qui sont agencées dans le rayon d'action du robot, les valeurs de mesure ou les champs de mesure [SM (t)] pouvant être mémorisés sous forme numérisée dans l'ordinateur et pouvant être protocolisés et analysés à l'aide de programmes d'ordinateur,
**caractérisé en ce que** les valeurs de mesure ou les champs de mesure [SM (t)] protocolisés peuvent être transmis en temps réel à la commande de robot pour assurer la commande des mouvements du robot.

2. Système selon la revendication 1, **caractérisé en ce que** les capteurs (S) sont placés de manière amovible sur des bras de robot.

3. Système selon la revendication 1, **caractérisé en ce qu'**il est prévu une interface de noyau en temps réel, un raccord de réseau ou une interface parallèle, pour la transmission des valeurs de mesure ou des champs de mesure [SM (t)] protocolisés.

4. Système selon l'une des revendications 1 à 3, **caractérisé en ce que** le robot est fixé dans un véhicule, sur ou à côté d'une table de contrôle, ou bien sur ou à côté d'une plateforme de mesure.

5. Système selon l'une des revendications 1 à 4, **caractérisé en ce qu'**il est prévu une table de contrôle (T) de forme ronde circulaire, qui présente des secteurs (W) à angle aigu, pouvant être insérés et prélevés individuellement.

6. Système selon la revendication 5, **caractérisé en ce qu'**au moins des secteurs (W) prédéterminés sont dotés respectivement d'un support de données (D) pouvant être exploré sans contact, qui renferme des informations de mémorisation pour des opérations de mesure pouvant être initiées automatiquement.

7. Système selon l'une des revendications 4 à 6, **caractérisé en ce que** la table de contrôle (T) peut être déplacée et/ou tournée pas à pas par un entraînement direct asservi, qui forme un axe de robot à bras articulé ou y est associé.

8. Système selon l'une des revendications 1 à 3, **caractérisé en ce que** le robot (R) est monté sur ou à côté d'une table de contrôle ou d'une plateforme de mesure.

9. Système selon l'une des revendications 1 à 3, **caractérisé en ce qu'**au moins un robot (R) peut être monté dans un véhicule, à savoir sur le plancher du véhicule, à la place d'un siège de conducteur ou d'un siège de passager avant.

10. Système selon l'une des revendications 1 à 4, **caractérisé en ce que** trois tables modulaires ou postes (I, II, III) sont agencées dans le rayon d'action du robot (R).

11. Système selon la revendication 10, **caractérisé en ce que** le ou chaque robot (R) est agencé et peut être déplacé linéairement entre ou à côté de deux tables modulaires ou postes (I, II, III).
